# EUROPÄISCHE PATENTSCHRIFT

(11) **EP 3 039 501 B1**
(45) Veröffentlichungstag und Bekanntmachung des Hinweises auf die Patenterteilung: **16.03.2022**
(21) Anmeldenummer: 14738738.5
(22) Anmeldetag: 05.07.2014
(51) Int. Cl.: G05D 16/02

(54) **VENTILVORRICHTUNG**
VALVE DEVICE
DISPOSITIF DE SOUPAPE

(30) Priorität: 30.08.2013 DE 102013014452
(43) Veröffentlichungstag der Anmeldung: 06.07.2016
(73) Patentinhaber: Hydac Fluidtechnik GmbH, 66280 Sulzbach/Saar (DE)
(72) Erfinder: BRUCK, Peter, 66484 Althornbach (DE); SCHULZ, Frank, 66440 Blieskastel-Bierbach (DE)
(74) Vertreter: Bartels und Partner, Patentanwälte
(86) Internationale Anmeldenummer: PCT/EP2014/001853
(87) Internationale Veröffentlichungsnummer: WO 2015/028108

(56) Entgegenhaltungen:
- EP-B1- 1 226 478
- EP-B1- 1 625 307
- DE-A1- 2 050 360
- DE-A1- 10 308 910
- DE-A1-102005 056 039
- DE-C1- 3 938 417
- GB-A- 673 378

## Beschreibung

Die Erfindung betrifft eine Ventilvorrichtung, insbesondere in Form eines Proportional-Druckregelventils, mit einem in einem Ventilgehäuse längsverfahrbar geführten Ventilkolben, der abhängig von seiner Verfahrstellung einen Nutzanschluss mit einem Druckversorgungsanschluss sowie einem Tank- oder Rücklaufanschluss verbindet und der mittels einer Betätigungseinrichtung, insbesondere in Form eines bestrombaren Betätigungsmagneten, ansteuerbar ist.

Proportional-Druckregelventile werden sehr häufig in mobilen Arbeitsmaschinen zur elektrohydraulischen Vorsteuerung von Wegeventilen verwendet. Für kleinere Arbeitsmaschinen genügen regelmäßig direkt gesteuerte Proportional-Druckregelventile. Bei großen Arbeits- oder Baumaschinen, wie beispielsweise Baggern, erreichen die Wegeventile der Arbeitshydraulik aber Kolbendurchmesser, bei denen eine Vorsteuerung mit direkt gesteuerten Proportional-Druckregelventilen nicht mehr sinnvoll ist. Die großen Schieberventile verursachen bei schnellem Schalten einen Vorsteuerölstrom, der für die kleinen Vorsteuerventile nicht mehr verkraftbar ist.

Für diese Einsatzfälle kommen Proportional-Druckregelventile mit Flächenübersetzungen zum Einsatz. Diese Ventile haben eine druckwirksame Fläche, die kleiner als der Kolbendurchmesser ist. Somit werden die vom Regeldruck verursachten Kräfte, die gegen das Magnetsystem wirken, signifikant reduziert. Der große Kolben kann aber im Vergleich zum direkt gesteuerten Ventil einen wesentlich größeren Volumenstrom passieren lassen und somit die Schaltzeiten der großen Schieberventile deutlich verkürzen.

Dieses Prinzip der Flächenübersetzung hat im Vergleich zu einem klassisch vorgesteuerten Proportional-Druckregelventil den großen Vorteil, dass kein permanenter Vorsteuerölstrom fließen muss. Die Leckage dieser Ventile ist insbesondere im nicht bestromten Zustand extrem gering. Dies hat bei einer Notversorgung der Proportionalventile mit einem Druckspeicher signifikante Vorteile.

So zeigt als ein Vertreter dieser Gattung gemäß der Lehre der EP 1 625 307 B1 ein Ventil, insbesondere in Form eines Proportional-Sitzventils oder Schieberventils auf, mit einem Ventilgehäuse und mindestens drei, das Ventilgehäuse durchgreifenden Fluid-Anschlüssen sowie mit einem, im Ventilgehäuse geführten Hauptkolben und einem eine Vorsteuerung bewirkenden Vorsteuerkolben, der mittels einer bestrombaren Magneteinrichtung ansteuerbar ist. Bei einer geöffneten Vorsteuerung gelangt Fluid von einem der beiden Anschlüsse, die von dem Hauptkolben ansteuerbar sind, über eine Querschnittsverengung im Hauptkolben und die Vorsteuerung zum dritten, durch den Vorsteuerkolben ansteuerbaren Anschluss, wobei aufgrund des damit einhergehenden Druckabfalls der Hauptkolben in jeweils eine, die beiden Fluidanschlüsse von der Fluidmenge her ansteuerbare Steuerposition gelangt. Zwischen dem Hauptkolben und dem Vorsteuerkolben ist eine Druckfeder angeordnet, wobei der Kolbenhub des Hauptkolbens bei geöffneter Vorsteuerung proportional dem Magnetstrom der Magneteinrichtung ist, und wobei die Druckfeder in eine Ausnehmung des Hauptkolbens eingreift, in die die Querschnittsverengung in Form einer Blende mündet.

Dadurch, dass bei der bekannten Lösung an dem freien Ende der Druckfeder, das dem Vorsteuerkolben zugeordnet ist, ein Anlagestück angeordnet wird, das mit dem freien Ende des Vorsteuerkolbens über eine Anlagekugel in Verbindung steht, ist ein verbessertes Zusammenwirken zwischen Vorsteuerkolben und Hauptkolben geschaffen und insbesondere ist ein weitgehend hemmnisfreier und mithin funktionssicherer Betrieb gewährleistet.

Durch die EP 1 226 478 B1 ist wiederum ein Ventil, insbesondere Druckregelventil, bekannt, mit einem Ventilgehäuse, mit mindestens einem Pumpen-, Nutz- und Tankanschluss, wobei in dem Ventilgehäuse ein von einem Magnetanker ansteuerbarer Ventilkolben geführt ist, wobei das Ventil mit einer hydraulischen Dämpfungseinrichtung versehen ist, die einen Dämpfungsraum aufweist, der über eine Drossel mit Drosselstelle fluidführend mit dem Nutzanschluss verbunden ist, und wobei über eine Verbindungsleitung in Abhängigkeit von der Stellung des Ventilkolbens wahlweise der Pumpen- oder der Tankanschluss mit dem Nutzanschluss verbunden ist.

Dadurch, dass bei diesem bekannten Lösungsansatz die Drosselstelle zumindest teilweise aus einem Ringspalt gebildet ist, der zwischen einer Ringscheibe und Teilen des die Ringscheibe umgebenden Ventilgehäuses gebildet ist, dass die Ringscheibe punktweise mit dem Ventilgehäuse verbördelt ist, und dass an den Verbindungspunkten der Ringspalt unterbrochen ist ebenso wie durch die stirnseitige Anlage der Ringscheibe an dem Inneren des Ventilgehäuses, wird bei einer Auslenkung des Ventilkolbens in Richtung der Drossel, bedingt durch die Magnetkraft des Spaltmagneten, das im Dämpfungsraum bevorratete Fluid über die Drossel in Richtung des Nutzanschlusses verdrängt, wobei der Verdrängungsvolumenstrom über die Drossel einen örtlichen Druckaufbau erzeugt.

Auf die druckwirksame Fläche, die die Drosselstelle begrenzt, lässt sich eine Kraft ermitteln, die entgegen der auslenkenden Kraft des Ventilkolbens gerichtet ist und so eine dämpfende Wirkung auf den gesamten Ventilkolben ausübt. Beim Zurückfahren des Ventilkolbens in die umgekehrte Richtung muss dieses Fluidvolumen vom Nutzanschluss kommend in den sich nun vergrößernden Dämpfungsraum wieder über eine definierte Drossel zurückströmen, was gleichfalls zu einer Dämpfung der auftretenden Schwingungen führt und so ein verbessertes Ansteuerverhalten für das bekannte Ventil ergibt, was gleichfalls die Funktionssicherheit erhöht.

Trotz dieser vorteilhaften Merkmalsausgestaltungen im Stand der Technik betreffend die vorstehend beschriebenen Ventile kann aber nicht ausgeschlossen werden, dass insbesondere bei bestimmten Einsatzfällen die Reibungskräfte des Hauptkolbens nicht von der Flächenübersetzung mehr kompensiert werden können.

Besonders kritisch ist der Einsatzfall zu bewerten, bei dem die Ventile sehr lange maximal bestromt werden müssen und der Primärdruck kleiner als der maximal mögliche Regeldruck ist (Unterversorgung). Wenn im dahingehenden Fall Schmutzpartikel ins Laufspiel des jeweiligen Ventilkolbens geraten, erhöht sich dadurch deutlich die Reibung. Wenn nach dieser Haltezeit bei hoher Bestromung der Strom erneut reduziert wird, kann es dann zu einem "Ventilklemmer" kommen, weil die relativ kleine Federkraft der Rückstellfeder unter Umständen nicht mehr zum Rückschalten des Kolbens ausreicht. Dieser Fall ist sicherheitskritisch einzustufen, weil der vom Proportional-Druckregelventil angesteuerte Hauptschieber dann nicht mehr in die Neutrallage zurückgeschaltet oder gebracht werden kann und somit der Verbraucher nicht mehr angehalten werden kann.

Weitere Ventilvorrichtungen gehen aus der EP 1 625 307 B1, der DE 2 050 360, der GB 673 378, der DE 39 38 417 C1, der DE 10 2005 056 039 A1 und der DE 103 08 910 A1 hervor.

Ausgehend von diesem Stand der Technik liegt der Erfindung die Aufgabe zugrunde, die Rückschaltsicherheit eines flächenübersetzten Proportional-Druckregelventils signifikant zu erhöhen, ohne dass die systembedingten, vorstehend beschriebenen Vorteile des Ventils negativ beeinflusst werden.

Eine dahingehende Aufgabe löst eine Ventilvorrichtung mit den Merkmalen des Patentanspruchs 1 in seiner Gesamtheit.

Dadurch, dass gemäß dem kennzeichnenden Teil des Patentanspruchs 1 zwischen dem Ventilkolben und der Betätigungseinrichtung eine Steuereinrichtung vorhanden ist, die es erlaubt, den Ventilkolben auf seiner der Betätigungseinrichtung zugewandten Kolbenseite in Richtung des Tank- oder Rücklaufanschlusses derart drucklos zu machen, dass der Ventilkolben unter dem im Betrieb ansteuerbaren Versorgungs- und/oder Nutzanschlussdruck in Richtung der Betätigungseinrichtung verfährt, wenn diese vorzugsweise unbetätigt ist, funktioniert das erfindungsgemäße Ventil im normalen Betrieb genauso wie ein übliches flächenübersetztes Proportional-Druckregelventil. Dabei ist der an beiden Stirnseiten des Kolbens anliegende Druck gleich groß und entspricht dem Regeldruck. Die Steuereinrichtung, die bevorzugt als Steuerteil in der Art eines Messstiftes ausgebildet ist, ist auf ihrer einen Seite mit dem Regeldruck und auf ihrer anderen gegenüberliegenden Seite mit dem Tankdruck verbunden. Somit arbeitet das Steuerteil, respektive der Messstift regeldruckabhängig gegen die Magnetkraft.

Bei dieser üblichen Ventilfunktion wird der am Nutzanschluss angeschlossene hydraulische Verbraucher durch die Verbindung zum Druckversorgungs- oder Pumpenanschluss mit Hydraulikfluid versorgt.

Ist die Betätigungseinrichtung in Form des Betätigungsmagneten abgeschaltet und sollte der Haupt- oder Ventilkolben in seiner Offenstellung, also in der vorstehend beschriebenen, normalen Versorgungsfunktion klemmen, so stellt sich ventilbedingt auf beiden Haupt- oder Ventilkolbenseiten zunächst der gleiche Druck ein, der dem Arbeitsdruck am Nutzanschluss entspricht. Dabei ist die Magnetkraft bei abgeschalteter Spule gleich Null und die Steuereinrichtung, bevorzugt ausgebildet in Form eines messstiftartigen Steuerteils, wird vom Arbeitsdruck am Nutzanschluss in Richtung der Betätigungseinrichtung gedrückt. Aufgrund ihrer bevorzugten Geometrie ist die Steuervorrichtung dann in der Lage, eine Verbindung vom Nutzanschluss zum Tank- oder Rücklaufanschluss herzustellen. Damit wird ein Kammerbereich zwischen dem Haupt- oder Ventilkolben und der Steuereinrichtung auf Tankdruck entlastet. Eine im eigentlichen Sinne als Dämpfungsblende konzipierte Kolbenblende des Ventilkolbens wird nun zu einer Vorsteuerblende. Es entsteht insoweit dann ein Vorsteuerölstrom über diese Blende, was zu einem starken Druckabfall an derselben führt. Somit fällt auf der Steuerseite des Haupt- oder Ventilkolbens, der der Betätigungseinrichtung zugewandt ist, der Druck auf annähernd Tankdruck ab. Im dahingehenden Fall wird dann die Stirnseite des Hauptkolbens, welche dem Nutzanschluss zugewandt ist, zur allein druckwirksamen Fläche und es entsteht eine derart extrem starke Kraft auf den Ventil- oder Hauptkolben, die ca. 20 Mal stärker ist als im Stand der Technik aufgezeigt, die den Hauptkolben dann aus seiner klemmenden Öffnungsstellung befreit. Insoweit ist mit der erfindungsgemäßen Lösung eine Fail-safe-Funktion erreicht, die den Ventil- oder Hauptkolben regelrecht aus seiner etwaig klemmenden Öffnungsstellung herausbricht oder herausreißt.

Im Folgenden wird die erfindungsgemäße Ventillösung anhand eines Ausführungsbeispiels nach der Zeichnung näher erläutert. Dabei zeigen in prinzipieller und nicht maßstäblicher Darstellung die
- Fig. 1: in der Art eines Längsschnitts die erfindungsgemäße Ventilvorrichtungskonstruktion als Ganzes; und
- Fig. 2: einen vergrößerten Ausschnitt aus der Darstellung nach der Fig. 1.

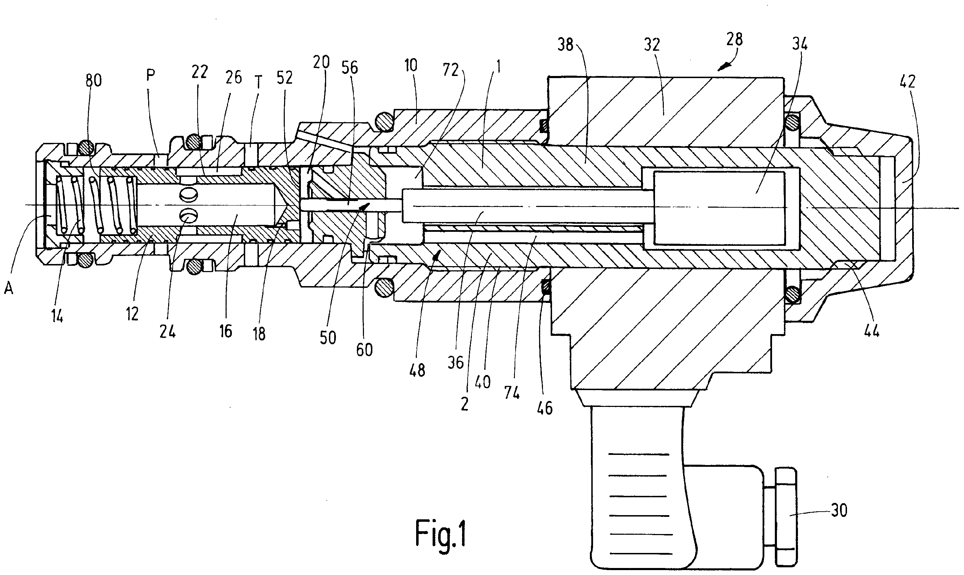

Das in der Fig. 1 gezeigte Ventil weist ein Ventilgehäuse 10 auf, das in der Art einer Einschraubpatrone ausgebildet ist, was man fachsprachlich auch mit Cartridge-Ventil bezeichnet, so dass sich das Ventil entweder über Außengewindestrecken (nicht näher dargestellt) oder über eine sonstige Festlegemöglichkeit in einem Ventilblock (nicht dargestellt) für einen funktionssicheren Gebrauch einschrauben oder einstecken lässt. Das Ventilgehäuse 10 weist an seinem einen freien Stirnende einen Nutzanschluss A auf, und ein Druckversorgungsanschluss P sowie ein Tank- oder Rücklaufanschluss T sind radial in das Ventilgehäuse 10 unter Einhalten eines vorgebbaren axialen Abstandes zueinander eingebracht. Die dahingehenden Anschlüsse A, P und T korrespondieren dann mit entsprechenden fluidführenden Zuleitungsanschlüssen im nicht näher dargestellten Ventilblock, in den das Ventil mit seinem Ventilgehäuse 10 später eingesetzt ist.

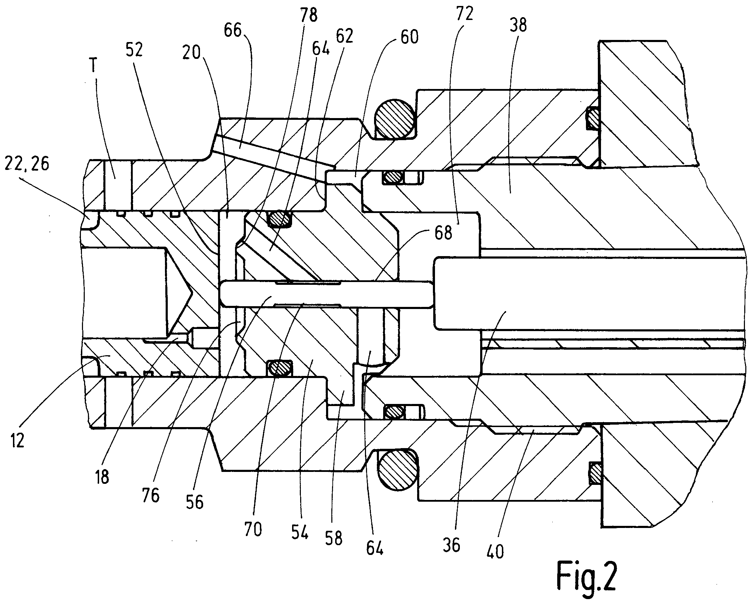

Innerhalb des Ventilgehäuses 10 ist längsverfahrbar ein Haupt- oder Ventilkolben 12 angeordnet, der in seiner in den Figuren 1 und 2 dargestellten Position die Anschlüsse A, P und T gegeneinander absperrt, so dass insoweit kein Fluidfluss zwischen den genannten Anschlüssen stattfinden kann. Ferner stützt sich der Haupt- oder Ventilkolben 12 in Blickrichtung auf die Fig. 1 gesehen auf seiner linken Seite an einer Rückstellfeder 14 ab, die bevorzugt als Druckfeder ausgebildet ist. Der Haupt- oder Ventilkolben 12 weist einen Hohlkanal 16 auf, der in der Art eines Sackloches ausgebildet ist und der auf seiner einen freien Stirnseite in den Nutzanschluss A ausmündet und auf seiner anderen freien Stirnseite in eine Blende 18 oder Drosselstelle übergeht, die eine fluidführende Verbindung zwischen dem Hohlkanal 16 und einem als Druckraum 20 dienenden Hohlkammerraum herstellt, der in Abhängigkeit von der Verfahrstellung des Haupt- oder Ventilkolbens 12 unterschiedliche Volumina einnimmt und in Blickrichtung auf die Fig. 1 gesehen in der äußerst rechten Verfahrstellung des Haupt- oder Ventilkolbens 12 ein Volumen nahe dem Wert Null annimmt.

Des Weiteren weist der Haupt- oder Ventilkolben 12 gemäß der Darstellung nach der Fig. 1 außenumfangsseitig einen reduzierten Durchmesser 22 auf, dessen axiale Länge in Verfahrrichtung des Haupt- oder Ventilkolbens 12 gesehen kleiner ist als der Abstand von Druckversorgungsanschluss P zu Tank- oder Rücklaufanschluss T. Des Weiteren ist im Bereich der Durchmesserreduzierung 22 die Wand des Haupt- oder Ventilkolbens 12 von einer Bohrungsreihe 24 radial durchgriffen, die eine fluidführende Verbindung zwischen dem Nutzanschluss A und einer Ringkammer 26 herstellt, die zum einen von der Innenwand des Ventilgehäuses 10 begrenzt ist und zum anderen von der Außenwand des Haupt- oder Ventilkolbens 12 im Bereich der Durchmesserreduzierung 22. Bewegt sich in Blickrichtung auf die Fig. 1 gesehen der Haupt- oder Ventilkolben 12 um eine vorgebbare Wegstrecke nach links, lässt sich dergestalt der Nutzanschluss A druckführend mit dem Druckversorgungsanschluss P über die Ringkammer 26 und die Bohrungsreihe 24 sowie den Hohlkanal 16 verbinden. Bei einer Verfahrrichtung des Haupt- oder Ventilkolbens 12 weitgehend nach rechts wird die dahingehende Druckversorgung unterbunden und der Nutzanschluss A ist wiederum über den Hohlkanal 16, die Bohrungsreihe 24 sowie die Ringkammer 26 fluidführend an den Tank- oder Rücklaufanschluss T angeschlossen. Ähnlich wie die Bohrungsreihe 24 kann, wie dies auch die Fig. 1 andeutet, sowohl der Druckversorgungsanschluss P als auch der Tank- oder Rücklaufanschluss T aus einer radial im Ventilgehäuse 10 durchgehend verlaufenden Bohrungsreihe gebildet sein.

Für eine elektrische Betätigung des Haupt- oder Ventilkolbens 12 dient ein als Ganzes mit 28 bezeichnetes Magnetsystem, das für einen elektrischen Anschluss eine Leitungsdose 30 sowie einen innerhalb einer Magnetspule 32 (nicht näher dargestellt) geführten und betätigbaren Magnetanker 34 aufweist. Für die Betätigung des Kolbens 12 dient ein stößelartiges Betätigungsteil 36, das in Blickrichtung auf die Fig. 1 gesehen an seinem rechten Ende mit dem Magnetanker 34 verbunden ist. Der Magnetanker 34 ist in einem an sich bekannten Polrohrsystem 38 längsverfahrbar geführt, und das vordere Ende des Polrohrsystems 38 ist in üblicher Weise über eine Gewindestrecke 40 innenumfangsseitig in das Ventilgehäuse 10 eingeschraubt. Die Magnetspule 32 mit ihren Gehäuseteilen ist auf den Außenumfang des Polrohrsystems 38 aufgeschoben und mit einem Deckelteil 42, das über eine weitere Gewindestrecke 44 auf das eine freie Ende des Polrohrsystems 38 aufschraubbar ist, an dem rechten freien stirnseitigen Ende des Ventilgehäuses 10 gelagert und an dieser Stelle über eine Ringdichtung 46 entsprechend abgedichtet. Sofern in der Ventilkonstruktion nach der Fig. 1 ringförmige Ausnehmungen dargestellt sind, sind diese mit entsprechenden Dichtringen und/oder ringartigen Führungsbändern zu versehen, um eine übliche ventiltechnische Abdichtung zu erreichen. Da dahingehende Abdichtsysteme in der Ventiltechnik zum Stand der Technik gehören, wird hierbei nicht mehr im Einzelnen näher darauf eingegangen. Das Magnetsystem 28 mit dem Magnetanker 34 sowie dem Betätigungsteil 36 stellen eine im Stand der Technik übliche Betätigungseinrichtung 48 für das Ansteuern des Haupt- oder Ventilkolbens 12 dar.

Gemäß der erfindungsgemäßen Ausgestaltung der Ventilvorrichtung ist zwischen dem Haupt- oder Ventilkolben 12 und der Betätigungseinrichtung 48 eine als Ganzes mit 50 bezeichnete Steuereinrichtung vorhanden, die es erlaubt, den Haupt- oder Ventilkolben 12 auf seiner der Betätigungseinrichtung 48 zugewandten Kolbenseite 52 in Richtung des Tank- oder Rücklaufanschlusses T derart drucklos zu machen, dass der Haupt- oder Ventilkolben 12 unter dem im Betrieb ansteuerbaren Versorgungs- und/oder Nutzanschlussdruck in Richtung der Betätigungseinrichtung 48 verfährt, wenn diese unbetätigt ist. Dabei ist im vorliegenden Ausführungsbeispiel die Betätigungseinrichtung 48 als sogenannter drückender Betätigungsmagnet 28 ausgebildet, der bei einem Bestromen der Magnetspule 32 über die Leitungsdose 30 in Blickrichtung auf die Fig. 1 gesehen von seiner dort gezeigten einen bestromten Mittellage weiter nach links verfährt, bis der Druckversorgungsanschluss P über die Bohrungsreihe 24 in fluidführende Verbindung mit dem Nutzanschluss A kommt. Bleibt das Magnetsystem 28 unbestromt, wird über die Rückstellfeder 14 der Haupt- oder Ventilkolben 12 in seine maximal mögliche rechte Verfahrstellung (nicht dargestellt) gebracht und dabei über das Betätigungsteil 36 der Magnetanker 34 in Blickrichtung auf die Fig. 1 gesehen aus seiner gezeigten Funktionsstellung in seine maximal mögliche rechte Endposition (nicht dargestellt) innerhalb des Polrohrsystems 38 verfahren.

Wie insbesondere die Fig. 2 zeigt, weist die Steuereinrichtung 50 ein innerhalb des Ventilgehäuses 10 sowie an der Betätigungseinrichtung 48 stationär festgelegtes Führungsteil 54 auf, das von einem längsverfahrbar geführten Steuerteil 56 durchgriffen ist. Das Führungsteil 54 ist in der Art einer Führungsbuchse ausgebildet und mit einer randseitigen flanschartigen Verbreiterung 58 in einem stirnseitigen Begrenzungsspalt 60 zwischen einer Ringverbreiterung 62 des Ventilgehäuses 10 und dem freien stirnseitigen Ende des Polrohrsystems 38 angeordnet. Das Steuerteil 56 ist in der Art eines kolbenartigen Messstiftes ausgebildet, das eine Mittenausnehmung des Führungsteiles 54 vollständig durchgreift, wobei das Steuerteil 56 mit seinem einen freien Ende in Anlage mit der der Betätigungseinrichtung 48 zugewandten Kolbenseite 52 des Haupt- oder Ventilkolbens 12 ist und mit seinem anderen freien Ende in Anlage mit dem verfahrbaren Betätigungsteil 36 der Betätigungseinrichtung 48 ist.

Wie des Weiteren die Fig. 2 zeigt, weist das Führungsteil 54 einen fluidführenden Kanal 64 auf, der mit seinem einen freien Ende in den bereits genannten Druckraum 20 ausmündet und mit seinem anderen Ende permanent fluidführend an den Tank- oder Rücklaufanschluss T angeschlossen ist. Für die dahingehende Anschlussverbindung mündet ein innerhalb des Ventilgehäuses 10 verlaufender Schrägkanal 66 in den bereits vorgestellten Begrenzungsspalt 60 aus und an seinem anderen Ende ist der Schrägkanal 66 über eine nicht näher dargestellte Fluidverbindung innerhalb des nicht dargestellten Ventilblockes an den Tank- oder Rücklaufanschluss T angeschlossen. Während das eine Kanalende 64 gleichfalls einen Schrägverlauf innerhalb des Führungsteils 54 hat, mündet das andere Kanalende 64 in einen radialen Querstich aus, der mit seinem einen freien Ende in den Begrenzungsspalt 60 und mit seinem anderen freien Ende in die kanalartige Mittenführung 68 für das messstiftartige Steuerteil 56 ausmündet. Das stiftartige Steuerteil 56 weist in seinem mittleren Bereich eine weitere Ausnehmung 70 auf, die sich durch eine Durchmesserreduzierung im Steuerteil 56 ergibt und deren axiale Länge derart gewählt ist, dass, wenn der Steuerstift 56 in Blickrichtung auf die Fig. 2 gesehen von seiner dort gezeigten linken Position in einer der weiter rechts liegenden Verfahrstellungen gelangt, über die kanalartige Ausnehmung 70 eine Fluidführung zwischen linkem und rechtem Ende des Kanals 64 über die Mittenführung 68 im Führungsteil 54 hergestellt ist. Bei der dahingehenden aktiven Verfahrstellung des Steuerteils 56 ist dann eine druck- und medienführende Verbindung zwischen der Druckkammer 20 sowie über die Kanäle 64 und 66 zum Tankanschluss oder Rücklaufanschluss T hergestellt, so dass insoweit der Druckraum 20 dann drucklos gehalten ist.

Wie sich des Weiteren aus den Figuren ergibt, mündet das eine freie Ende des stangenartigen Betätigungsteiles 36 in eine neben dem Druckraum 20 vorhandene weitere Hohlkammer 72 aus, die jedoch über den Begrenzungsspalt 60, der zum Tank- oder Rücklaufanschluss T führt, weitestgehend drucklos gehalten ist. Um einen reibungslosen Verfahrbetrieb für den Magnetanker 34 sicherstellen zu können, ist innerhalb des Polrohrsystems 38 ein Druckausgleichskanal 74 angeordnet, der mit seinem einen freien Ende in die weitere Hohlkammer 72 ausmündet und mit seinem anderen Ende in den Aufnahmeraum für den Magnetanker 34 innerhalb des Polrohrsystems 38. Sofern das messstiftarige Steuerteil 56 in Anlage ist mit dem freien stirnseitigen Ende des stangenartigen Betätigungsteils 36, findet die dahingehende Anlageberührung innerhalb der weiteren Hohlkammer 72 statt, und zwar in jeder Verfahrstellung von Steuerteil 56 und Betätigungsteil 36. Wie sich insbesondere aus der Darstellung nach der Fig. 2 ergibt, ist das vordere stirnseitige Ende des Führungsteils 54, das der einen Kolbenseite 52 des Haupt- oder Ventilkolbens 12 zugewandt ist, mit einem ringförmigen Rücksprung 76 versehen, in den das Steuerteil 56 zurückgleiten kann, sofern der Haupt- oder Ventilkolben 12 in Anlage mit dem vorspringenden Rand 78 des Führungsteils 54 kommen sollte, das den genannten im Führungsteil 54 vertieften Rücksprung 76 umgrenzt.

Im Folgenden soll nun der funktionsgemäße Betrieb der vorstehend beschriebenen Ventilvorrichtung näher erläutert werden. Im normalen Betrieb funktioniert das erfindungsgemäße Ventil genau wie ein übliches flächenübersetztes Proportional-Druckregelventil. Das Magnetsystem 28 ist entsprechend bestromt, und der Haupt- oder Ventilkolben 12 in einer linken Verfahrstellung, bei der eine fluidführende Verbindung zwischen dem Druckversorgungsanschluss P und dem Nutzanschluss A stattfindet. Der Tank- oder Rücklaufanschluss T ist dabei über den Haupt- oder Ventilkolben 12 gesperrt. Im dahingehenden Betriebsfall ist der Druck an beiden Stirnseiten 52, 80 des Haupt- oder Ventilkolbens 12 gleich groß und entspricht dem Regeldruck. Das messstiftartige Steuerteil 56 ist dann in Blickrichtung auf die Figuren gesehen auf der linken Seite mit dem Regeldruck und auf der rechten Seite mit dem Tankdruck verbunden, so dass die Ansteuerung für das Steuerteil 56 regeldruckabhängig gegen die Magnetkraft des Magnetsystems 28 über das stangenförmige Betätigungsteil 36 stattfindet.

Kommt es nun aufgrund eingetragener Verschmutzungen zwischen dem Druckversorgungsanschluss P und dem Nutzanschluss A zu einer Beeinträchtigung des Laufspiels zwischen der Außenumfangsseite des Haupt- oder Ventilkolbens 12 mit der zuordenbaren Führungsinnenwand des Ventilgehäuses 10, kann der genannte Kolben 12 in seiner Offenstellung klemmen, wobei wiederum auf beiden Hauptkolbenseiten 52 und 80 zunächst der gleiche Druck herrscht, der dem Arbeitsdruck am Nutzanschluss A entspricht. Ist das Magnetsystem 28 nicht länger bestromt, ist also das Magnetsystem 28 abgeschaltet, soll an sich die Rückstellfeder 14 den Kolben 12 von sich aus zurückstellen, um beispielsweise eine fluidführende Verbindung zwischen dem Nutzanschluss A und dem Tank- oder Rücklaufanschluss T im Ventilgehäuse 10 herstellen zu können. Aufgrund des klemmenden Haupt- oder Ventilkolbens 12 ist die dahingehende Rückstellung aber nicht mehr möglich.

Hier setzt nun die erfindungsgemäße Lösung ein, indem das messstiftartige Steuerteil 56 vom Arbeitsdruck am Nutzanschluss A nunmehr in Blickrichtung auf die Figuren gesehen nach rechts gedrückt wird. Aufgrund seiner dargelegten Geometrie, insbesondere unter Einbezug seiner kanalartig ausgebildeten Ausnehmung 70 öffnet er in dieser rechten Verfahrstellung dann eine Verbindung vom Druckraum 20 über den Kanal 64 zum Tank- oder Rücklaufanschluss T. Somit kann die hohlkammerartige Druckkammer 20 zwischen dem Haupt- oder Ventilkolben 12 sowie dem messstiftartigen Steuerteil 56 auf Tankdruck entlastet werden. Die eigentlich als Dämpfungsblende wirkende Kolbenblende wird nun zu einer Vorsteuerblende 18, wobei im beschriebenen Funktionsfall ein Vorsteuerölstrom vom Hohlkanal 16 des Ventilkolbens 12 kommend über diese Blende 18 geführt ist, was zu einem starken Druckabfall an derselben führt, mit der Folge, dass auf der rechten Stirnseite 52 des Haupt- oder Ventilkolbens 12 der Druck in der Kammer 20 auf annähernd Tankdruck abfällt. In diesem Fall wird die andere freie Stirnseite 80 des Haupt- oder Ventilkolbens 12 zur allein druckwirksamen Fläche, wobei derart eine extrem starke Kraft entsteht, die den Haupt- oder Ventilkolben 12 auf jeden Fall aus seiner beschriebenen Klemmstellung durch Losreißen befreit. Nach diesem Losreißen ist es wiederum möglich, das Ventil in üblich beschriebener Art zu betreiben.

Insbesondere sind zwei kritische Lastfälle in der Praxis aufgezeigt, für die die erfindungsgemäße Ventilvorrichtung besonders einschlägig ist und die funktionale Sicherheit des Ventils signifikant erhöhen kann.

Der eine Fall ist darin zu sehen, wenn das Ventil in der sogenannten Sättigung betrieben wird, bei der der Versorgungsdruck regelmäßig größer ist als der maximal mögliche Regeldruck. Das Ventil schaltet dann bei maximaler Bestromung durch bis auf Hubanschlag. Wenn diese Maximalbestromung längere Zeit aufrechterhalten wird, können Schmutzpartikel ins Laufspiel zwischen Kolben 12 und der zuordenbaren Innenwand des Ventilgehäuses 10 gelangen und die Reibung für den Kolben 12 erhöhen. Wenn danach das Ventil wieder abgeschaltet wird, kann der Kolben 12 klemmen, weil die relativ geringe Federkraft des Energiespeichers 14 es nicht schafft, die durch Verschmutzungspartikel im Fluidstrom ungewollt entstehende Reibung zu überwinden. In diesem Fall hebt das messstiftartige Steuerteil 56 ab und der dadurch auftretende Vorsteuerölstrom verursacht die Druckdifferenz am Kolben 12 und reißt denselben aus seiner Hemmung heraus.

Ferner gibt es demgegenüber anders gelagerte Einsatzfälle, bei denen die Proportionalventile einen bestimmten Regeldruck über längere Zeit konstant halten müssen. Dabei kann der Versorgungsdruck über einen gewissen Zeitraum unterhalb des Regeldrucks liegen und dann wieder darüber, ohne dass die Bestromung des Proportionalventils verändert wird. Auch hier geht wiederum das Ventil bei einer Unterversorgung auf Hubanschlag. Steigt der Systemdruck wieder über den Regeldruck, so muss das Proportionalventil selbständig zurück in die Regelposition gehen, damit der Regeldruck im Falle des beschriebenen Klemmens des Kolbens 12 nicht unkontrolliert dem Primärdruck folgt.

Auch in diesem Fall wirkt wiederum der gleiche Effekt, und der Messstift 56 hebt ab, weil der Regeldruck größer als der Vorgabedruck wird und somit der Stift 56 gegen die Magnetkraft nach rechts verschoben werden kann und seine Fail Safe-Funktion startet.

Mit der erfindungsgemäßen Ventilvorrichtung ist es also möglich, in jedem Fall sogenannte "Ventilklemmer" im eingeschalteten Zustand eines elektromagnetisch betätigbaren Ventils zu verhindern. Aufgrund des Umstandes, dass die Ventile in den meisten Fällen Schieberventile ansteuern, die im drucklosen Zustand der Ansteuerventile die Bewegung der Aktuatoren (= an dem Nutzanschluss A angeschlossene hydraulische Verbraucher) anhalten, führt ein Klemmen der Ansteuerventile im eingeschalteten Zustand zu unkontrollierten Bewegungen dieser Aktuatoren. Mit der erfindungsgemäßen Ventilvorrichtung ist dies wirksam verhindert.

## Patentansprüche

1. Ventilvorrichtung, insbesondere in Form eines Proportional-Druckregelventils, mit einem in einem Ventilgehäuse (10) längsverfahrbar geführten Ventilkolben (12), der abhängig von seiner Verfahrstellung einen Nutzanschluss (A) mit einem Druckversorgungsanschluss (P) sowie einem Tank- oder Rücklaufanschluss (T) verbindet und der mittels einer Betätigungseinrichtung (48), insbesondere in Form eines bestrombaren Betätigungsmagneten (28), ansteuerbar ist, **dadurch gekennzeichnet, dass** zwischen dem Ventilkolben (12) und der Betätigungseinrichtung (48) eine Steuereinrichtung (50) vorhanden ist, die es erlaubt, den Ventilkolben (12) auf seiner der Betätigungseinrichtung (48) zugewandten Kolbenseite (52) in Richtung des Tank- oder Rücklaufanschlusses (T) derart drucklos zu machen, dass der Ventilkolben (12) unter dem im Betrieb ansteuerbaren Versorgungs- und/oder Nutzanschlussdruck in Richtung der Betätigungseinrichtung (48) verfährt, wenn diese unbetätigt ist.

2. Ventilvorrichtung nach Anspruch 1, **dadurch gekennzeichnet, dass** die Steuereinrichtung (50) ein am Ventilgehäuse (10) und/oder an der Betätigungseinrichtung (48) stationär festgelegtes Führungsteil (54) aufweist, das von einem längsverfahrbar geführten Steuerteil (56) durchgriffen ist.

3. Ventilvorrichtung nach Anspruch 2, **dadurch gekennzeichnet, dass** das Steuerteil (56) mit seinem einen freien Ende in Anlage mit der der Betätigungseinrichtung (48) zugewandten Kolbenseite (52) des Ventilkolbens (12) und mit seinem anderen freien Ende in Anlage mit einem verfahrbaren Betätigungsteil (36) der Betätigungseinrichtung (48) bringbar ist.

4. Ventilvorrichtung nach Anspruch 2 oder 3, **dadurch gekennzeichnet, dass** das Führungsteil (54) einen fluidführenden Kanal (64) aufweist, der mit seinem einen Ende in einen Druckraum (20) zwischen Ventilkolben (12) und Führungsteil (54) mündet und mit seinem anderen Ende an den Tank- oder Rücklaufanschluss (T) angeschlossen ist.

5. Ventilvorrichtung nach Anspruch 4, **dadurch gekennzeichnet, dass** das Steuerteil (56) in Verfahrrichtungen auf den Ventilkolben (12) den fluidführenden Kanal (64) sperrt und in gegenläufigen Verfahrstellungen freigibt.

6. Ventilvorrichtung nach einem der Ansprüche 2 bis 5, **dadurch gekennzeichnet, dass** der Ventilkolben (12) vorzugsweise in der Art eines Sackloches einen Hohlkanal (16) aufweist, der auf seiner einen freien Seite in den Nutzanschluss (A) und auf seiner anderen freien Seite in eine Blende (18) oder Drosselstelle ausmündet, die den Hohlkanal (16) des Ventilkolbens (12) permanent fluidführend mit dem Druckraum (20) zwischen dem Ventilkolben (12) und dem Führungsteil (54) verbindet.

7. Ventilvorrichtung nach einem der vorstehenden Ansprüche, **dadurch gekennzeichnet, dass** der Ventilkolben (12) außenumfangsseitig mit einer Durchmesserreduzierung (22) versehen ist, deren axiale Länge kleiner ist als der Abstand von Druckversorgungsanschluss (P) zu Tank- oder Rücklaufanschluss (T).

8. Ventilvorrichtung nach einem der vorstehenden Ansprüche, **dadurch gekennzeichnet, dass** der Nutzanschluss (A) stirnseitig und der Druckversorgungsanschluss (P) sowie der Tank- oder Rücklaufanschluss (T) radial in das Ventilgehäuse (10) eingebracht sind.

9. Ventilvorrichtung nach einem der vorstehenden Ansprüche, **dadurch gekennzeichnet, dass** zwischen der anderen freien stirnseitigen Kolbenseite, die dem Nutzanschluss (A) zugewandt ist, und dem Ventilgehäuse (10) ein Energiespeicher, vorzugsweise in Form einer Druckfeder (14), eingebracht ist.

10. Ventilvorrichtung nach einem der Ansprüche 2 bis 9, **dadurch gekennzeichnet, dass** in das Ventilgehäuse (10) ein Schrägkanal (66) eingebracht ist, der den fluidführenden Kanal (64) im Führungsteil (54) an den Tank- oder Rücklaufanschluss (T) des Ventilgehäuses (10) anschließt.

## Claims

1. Valve apparatus, in particular a proportional pressure control valve with a valve piston (12) mounted such that it can be displaced in a longitudinal direction in a valve housing (10) , said valve piston connecting a service port (A) to a pressure supply port (P) and to a tank or return port (T) depending on its displacement position, and which can be controlled by means of an actuating device (48), particularly in the form of an actuating magnet (28) through which current can pass, **characterised in that** a control device (50) is provided between the valve piston (12) and the actuating device (48), which allows the valve piston (12) to be depressurised on its piston side (52) facing the actuating device (48) in the direction of the tank or return port (T) in such a way that the valve piston (12) is displaced in the direction of the actuating device (48) at the supply and/or service port pressure that can be set during operation when said actuating device is not actuated.

2. Valve apparatus according to claim 1, **characterised in that** the control device (50) comprises a guide part (10) fixed in a stationary manner to the valve housing (10) and/or to the actuating device (48), a control part passing through said guide part such that it can be displaced longitudinally.

3. Valve apparatus according to claim 2, **characterised in that** one free end of the control part (56) can be brought into contact with the piston side (52) of the valve piston (12) facing the actuating device (48) and **in that** the other free end of the control part can be brought into contact with a displaceable actuating part (36) of the actuating device (48).

4. Valve apparatus according to either claim 2 or claim 3, **characterised in that** the guide part (54) comprises a fluid-conveying channel (64), one end of which leads into a pressure chamber (20) between the valve piston (12) and the guide part (54), the other end of said channel being connected to the tank or return port (T).

5. Valve apparatus according to claim 4, **characterised in that** the control part (56) blocks the fluid-conveying channel (64) in displacement directions towards the valve piston (12) and releases displacement positions in the opposite direction.

6. Valve apparatus according to any one of claim 2 to claim 5, **characterised in that** the valve piston (12) preferably comprises a hollow channel (16) in the form of a blind hole, one free side of said channel leading into service port A, while the other free end of said channel leads into an orifice plate (18) or restrictor, which connects the hollow channel (16) of the valve piston (12) in a permanent fluid-conveying manner with the pressure chamber (20) between the valve piston (12) and the guide part (54).

7. Valve apparatus according to any one of the preceding claims, **characterised in that** the outer circumference of the valve piston (12) is furnished with a reduction in its diameter, the axial length of said reduction being smaller than the distance from the pressure supply port (P) to the tank or return port (T).

8. Valve apparatus according to any one of the preceding claims, **characterised in that** the service port (A) is fitted on the end face and the pressure supply port (P) and the tank or return port (T) are fitted radially within the valve housing (10).

9. Valve apparatus according to any one of the preceding claims, **characterised in that** an energy accumulator, preferably in the form of a compression spring (14), is fitted between the other free piston side on the end, which faces the service port (A) and the valve housing (10).

10. Valve apparatus according to any one of claims 2 to 9, **characterised in that** an oblique channel (66) is provided in the valve housing (10), said channel connecting the fluid-conveying channel (64) in the guide part (54) to the tank or return port (T) of the valve housing (10).

## Revendications

1. Système de soupape, notamment sous la forme d'une soupape de réglage de la pression proportionnelle, comprenant un piston (12) de soupape, qui est guidé avec possibilité de se déplacer longitudinalement dans un corps (10) de soupape et qui met, en fonction de sa position en déplacement, un raccord (A) utile en communication avec un raccord (P) d'alimentation en pression ainsi qu'avec un raccord (T) de réservoir ou de retour et qui peut être commandé au moyen d'un dispositif (48) d'actionnement, notamment sous la forme d'un aimant (28) d'actionnement pouvant être alimenté en courant électrique, **caractérisé en ce qu'**entre le piston (12) de la soupape et le dispositif (48) d'actionnement, il y a un dispositif (50) de commande, qui permet de rendre le piston (12) de la soupape sur son côté (52) de piston, tourné vers le dispositif (48) d'actionnement, sans pression en direction du raccord (T) de réservoir ou de retour, de manière à ce que le piston (12) de la soupape se déplace sous la pression du raccord d'alimentation et/ou du raccord utile, pouvant être réglé en fonctionnement, en direction du dispositif (48) d'actionnement, lorsque celui-ci n'est pas actionné.

2. Système de soupape suivant la revendication 1, **caractérisé en ce que** le dispositif (50) de commande a une partie (54) de guidage fixée de manière permanente au corps (10) de la soupape et/ou au dispositif (48) d'actionnement et traversée par une partie (56) de commande guidée avec possibilité de se déplacer longitudinalement.

3. Système de soupape suivant la revendication 2, **caractérisé en ce que** la partie (56) de commande peut, par l'une de ses extrémités libres, être mise en contact avec le côté (52), tourné vers le dispositif (48) d'actionnement, du piston (12) de la soupape et par son autre extrémité libre en contact avec une partie (36) d'actionnement pouvant être déplacée du dispositif (48) d'actionnement.

4. Système de soupape suivant la revendication 2 ou 3, **caractérisé en ce que** la partie (54) de guidage a un conduit (64) pour du fluide, qui débouche par l'une de ses extrémités dans un espace (20) sous pression entre le piston (12) de la soupape et la partie (54) de guidage et qui est raccordé par son autre extrémité au raccord (T) de réservoir ou de retour.

5. Système de soupape suivant la revendication 4, **caractérisé en ce que** la partie (56) de commande bloque, dans des directions de déplacement sur le piston (12) de la soupape, le conduit (64) pour du fluide et le dégage dans des positions de déplacement en sens contraire.

6. Système de soupape suivant l'une des revendications 2 à 5, **caractérisé en ce que** le piston (12) de la soupape a, de préférence à la manière d'un trou borgne, un conduit (16) creux, qui débouche sur l'un de ses côtés libres dans le raccord (A) utile et sur son autre côté libre dans un diaphragme (18) ou un point d'étranglement, qui met le conduit (16) creux du piston (12) de la soupape en communication fluidique permanente avec l'espace (20) sous pression entre le piston (12) de la soupape et la partie (54) de guidage.

7. Système de soupape suivant l'une des revendications précédentes, **caractérisé en ce que** le piston (12) de la soupape est pourvu du côté du pourtour extérieur d'une réduction (22) de diamètre, dont l'axe longitudinal est plus petit que la distance du raccord (P) d'alimentation en pression au raccord (T) de réservoir ou de retour.

8. Système de soupape suivant l'une des revendications précédentes, **caractérisé en ce que** le raccord (A) utile est disposé du côté frontal et le raccord (P) d'alimentation en pression ainsi que le raccord (T) de réservoir ou de retour sont disposés radialement dans le corps (10) de la soupape.

9. Système de soupape suivant l'une des revendications précédentes, **caractérisé en ce qu'**un accumulateur d'énergie, de préférence sous la forme d'un ressort (14) de compression, est monté entre l'autre côté libre du côté frontal du piston, qui est tourné vers le raccord (A) utile, et le corps (10) de la soupape.

10. Système de soupape suivant l'une des revendications 2 à 9, **caractérisé en ce que**, dans le corps (10) de la soupape, est ménagé un conduit (66) incliné, qui raccorde le conduit (64) pour du fluide dans la partie (54) de guidage au raccord (T) de réservoir ou de retour du corps (10) de la soupape.
